# EUROPEAN PATENT SPECIFICATION

(11) **EP 4 258 161 B1**
(45) Date of publication and mention of the grant of the patent: **12.08.2026**
(21) Application number: 21899565.2
(22) Date of filing: 29.06.2021
(51) Int. Cl.: G06F 40/58, G06V 10/96, G06V 30/413, G06V 30/148, G06V 30/10

(54) **IMAGE PROCESSING METHOD, IMAGE RECOGNITION APPARATUS, ELECTRONIC DEVICE, AND MEDIUM**
BILDVERARBEITUNGSVERFAHREN, BILDERKENNUNGSVORRICHTUNG, ELEKTRONISCHE VORRICHTUNG UND MEDIUM
PROCÉDÉ DE TRAITEMENT D'IMAGE, APPAREIL DE RECONNAISSANCE D'IMAGE, DISPOSITIF ÉLECTRONIQUE ET SUPPORT

(30) Priority: 04.12.2020 CN 202011409362
(43) Date of publication of application: 11.10.2023
(73) Proprietor: Beijing Sogou Technology Development Co., Ltd., Haidian District, Beijing 100084 (CN)
(72) Inventor: WANG, Congtao, Beijing 100084 (CN); YANG, Jiajun, Beijing 100084 (CN); WEI, Yuanming, Beijing 100084 (CN); CHEN, Wei, Beijing 100084 (CN); WEI, Tao, Beijing 100084 (CN); WU, Jun, Beijing 100084 (CN); GONG, Li, Beijing 100084 (CN); ZHU, Weiji, Beijing 100084 (CN)
(74) Representative: Gunzelmann, Rainer
(86) International application number: PCT/CN2021/103089
(87) International publication number: WO 2022/116523

(56) References cited:
- CN-A- 102 063 611
- CN-A- 102 509 479
- CN-A- 111 738 264
- US-A1- 2010 272 360
- US-A1- 2014 327 940
- US-A1- 2016 110 597
- US-A1- 2018 113 859

## Description

### RELATED APPLICATION

This application claims priority to Chinese Patent Application No. 202011409362.8, entitled "IMAGE PROCESSING METHOD, IMAGE RECOGNITION APPARATUS, ELECTRONIC DEVICE, AND MEDIUM" filed on December 04, 2020.

### FIELD OF THE TECHNOLOGY

The present disclosure relates to the field of image processing technologies, and in particular, to an image processing method, an image recognition apparatus, an electronic device, and a medium.

### BACKGROUND OF THE DISCLOSURE

With the rapid development of Internet technology, more and more applications are migrated to the Internet. For the convenience of use, users can use image recognition apparatuses such as dictionary pens or talking pens to obtain non-source language texts. The obtained texts are translated or annotated through data on the Internet to improve the learning efficiency of the users.

In the related art, during the use of the image recognition apparatus to obtain the text, generally, an image corresponding to the text is acquired, and then character recognition is performed on the image to recognize characters or sentences. However, computing power of the image recognition apparatus is limited. In this case, in order to improve accuracy of the recognition, an optical character recognition model is usually set in the image recognition apparatus to perform the character recognition. The higher the recognition accuracy, the worse the real-time performance of the optical character recognition model performing recognition on an intermediate spliced image, however, a final result is more accurate. D1 (US 2010/272360 A1) refers to a method for outputting consecutive characters in video-recording mode.

### SUMMARY

An object of the present disclosure is, at least in part, to provide an image processing method, an image recognition apparatus, an electronic device, and a medium, capable of improving recognition real-time performance of character recognition performed on an intermediate spliced image and ensuring accuracy of a final recognition result, thereby shortening a response time of a first character displayed on a screen.

The present invention is defined by the appended claims.

Based on the technical solutions of the present invention, the image captured in real time is stored in the image splicing module by the first thread, and in the process of storing the captured real-time image by the first thread, the real-time splicing is performed on the stored real-time image by the second thread. In this way, by using a concurrent manner, a loss rate of the image captured in real time can be effectively reduced, and definition of the spliced image can be effectively ensured in a case that the image loss rate is reduced, thereby ensuring accuracy of a recognized final recognition result. Splicing delay can also be effectively reduced in the concurrent manner. In addition, due to the use of the lightweight OCR model for performing the character recognition on the intermediate spliced image, a processor load of the image recognition apparatus can be reduced, and recognition real-time performance of the character recognition performed on the intermediate spliced image can be improved. In a case that the recognition real-time performance is improved, a response time of a first character displayed on a screen can be shortened, thereby improving user experience.

### BRIEF DESCRIPTION OF THE DRAWINGS

FIG. 1 is a flowchart of an image processing method according to one or more embodiments of the present disclosure.
FIG. 2 is a schematic structural diagram of an image recognition apparatus according to one or more embodiments of the present disclosure.
FIG. 3 is a structural block diagram of an image recognition apparatus used as a device according to one or more embodiments of the present disclosure.
FIG. 4 is a structural block diagram of a server side according to one or more embodiments of the present disclosure.

### DESCRIPTION OF EMBODIMENTS

To better understand the foregoing technical solutions, the technical solutions of the present disclosure are described in detail below through the accompanying drawings and specific embodiments. It is to be understood that the specific features in the present disclosure and the embodiments are detailed description of the technical solutions of the present disclosure instead of limitations on the technical solutions of the present disclosure. The technical features in the present disclosure and the embodiments can be combined with each other in the case of no conflict.

For a technical problem of high delay of an intermediate recognition result during character recognition through an image recognition apparatus, the present disclosure provides an image processing solution, which is used for storing, in a process of capturing an image in real-time through an image recognition apparatus, the captured real-time image in an image splicing module by a first thread; performing, in the process of storing the captured real-time image by the first thread, real-time splicing on the stored real-time image by a second thread to obtain an intermediate spliced image; performing character recognition on the intermediate spliced image through a lightweight optical character recognition model to obtain an intermediate recognition result; obtaining, in a case of detecting a state change of the image recognition apparatus, an image set including all images in the image splicing module, and performing the character recognition on the image set through a general optical character recognition model to obtain a final recognition result.

In this way, in the process of storing the captured real-time image by the first thread, the real-time splicing is performed on the stored real-time image by the second thread to obtain the intermediate spliced image. After obtaining the intermediate spliced image, the character recognition is performed on the intermediate spliced image using the lightweight OCR model. In this way, a data processing efficiency is improved in a concurrent manner, and the lightweight OCR model occupies less resources and has a high recognition efficiency, so that recognition real-time performance of the character recognition performed on the intermediate spliced image can be effectively improved, and in a case that the recognition real-time performance is improved, a response time of a first character displayed on a screen can be shortened, thereby improving user experience.

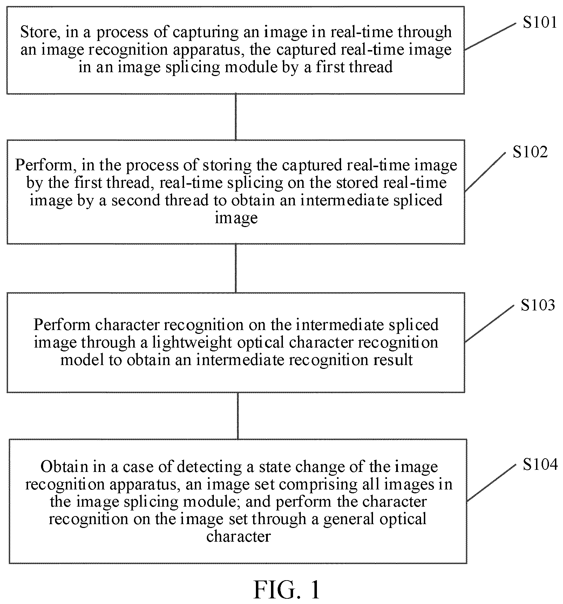

As shown in FIG. 1, an image processing method is provided in the present disclosure, including the following steps:
S101: Store, in a process of capturing an image in real-time through an image recognition apparatus, the captured real-time image in an image splicing module by a first thread;
S102: Perform, in the process of storing the captured real-time image by the first thread, real-time splicing on more than one image stored in the image splicing module by a second thread to obtain an intermediate spliced image;
S103: Perform character recognition on the intermediate spliced image through a lightweight optical character recognition model to obtain an intermediate recognition result, and display the intermediate recognition result, the lightweight optical character recognition model exclusively occupying a single-core processor in the image recognition apparatus for use; and
S104: Obtain, in a case that it is detected that a state of the image recognition apparatus changes, an image set including all images in the image splicing module, the all images comprising real-time images captured by the first thread, and perform the character recognition on the image set through a general optical character recognition model to obtain a final recognition result, and display the final recognition result; wherein it is determined that the state of the image recognition apparatus changes when it is detected that a pose of the image recognition apparatus relative to a target object changes.

According to some embodiments of the present disclosure, when the image recognition apparatus performs the character recognition on the image set through the general optical character recognition model, recognition data may be provided by a server connected to the image recognition apparatus, which is not specifically limited in the specification.

In step S101, the image recognition apparatus may generally be a device for recognizing characters such as a dictionary pen or a talking pen. In this case, in a process of using the image recognition apparatus to recognize characters, the image recognition apparatus captures an image of a target object in real time, and the target object is usually an e-book, a paper book, or the like. In this way, in a process of capturing the image in real time through the image recognition apparatus, the first thread in the image recognition apparatus is started, and the captured real-time image is put in the image splicing module of the image recognition apparatus by the first thread. The captured real-time images may be arranged based on time sequence, or may be randomly arranged. In a random arrangement, a serial number of each frame of the image needs to be stored, and the serial number is set according to capturing time of each frame of the image.

Using a dictionary pen A as an example, when the dictionary pen A is used by a user to contact a target text in a book B and move, a camera of the dictionary pen A is turned on, and an image is captured in real time through the camera during movement of the dictionary pen A on the target text. In this case, a first thread of the dictionary pen A is started, and the image captured in real time is put in an image splicing module by the first thread.

Then step S102 is performed, in this step, the second thread may be started through the image splicing module, or the second thread may be started through the image recognition apparatus, which is not specifically limited in the specification.

In addition, after starting the second thread, in the process of storing the captured real-time image by the first thread, the real-time splicing is performed on the more than one image stored in the image splicing module by the second thread to obtain the intermediate spliced image.

According to some embodiments of the present disclosure, every time one or more frames of images are put in the image splicing module, the real-time splicing is performed on the put image by the second thread, so as to obtain the intermediate spliced image. Because the second thread performs the real-time splicing on the image put in the image splicing module, the intermediate spliced image changes according to time.

Using the dictionary pen A as an example, in a process of capturing the image of the target text in real time through the dictionary pen A, the image captured in real time is stored in the image splicing module frame by frame by the first thread. If at a certain moment, a first frame of the image put in the image splicing module is represented by C1, a second frame is represented by C2, and a third frame is represented by C3, because the image splicing module starts the second thread, in a process of storing the captured real-time image by the first thread, an intermediate spliced image D1 is obtained by splicing the C1, the C2, and the C3 by the second thread. At a moment after the certain moment, a frame of the image C4 is added in the image splicing module, and in this case, an intermediate spliced image D2 is obtained by splicing the C1, the C2, the C3, and the C4 by the second thread. By analogy, every time a frame of the image is added in the image splicing module, the second thread splices the added frame of the image to obtain an intermediate spliced image. In this way, the image captured in real time is stored in the image splicing module by the first thread, and thus a loss rate of the image captured in real time can be effectively reduced. In addition, in the process of storing the captured real-time image by the first thread, the real-time splicing is performed on the stored real-time image by the second thread, and thus real-time performance of image splicing can be ensured, thereby ensuring definition of the intermediate spliced image.

After obtaining the intermediate spliced image by step S102, step S103 is performed, in which the character recognition may be performed on the intermediate spliced image in real time through the lightweight optical character recognition model to obtain the intermediate recognition result.

According to some embodiments of the present disclosure, in step S102, the real-time splicing is performed on the stored real-time image by the second thread in the process of storing the captured real-time image by the first thread, so that the intermediate spliced image changes in real time. In this way, in step S103, when the character recognition is performed on the intermediate spliced image through the lightweight optical character recognition model, it may be first determined whether a quantity of frames of the intermediate spliced image is not less than a preset quantity of frames. If the quantity of frames of the intermediate spliced image is less than the preset quantity of frames, the character recognition is not performed; if the quantity of frames of the intermediate spliced image is not less than the preset quantity of frames, it may be determined that a character length corresponding to the intermediate spliced image is usually greater than a set length, so that the character recognition may be performed on the intermediate spliced image through the lightweight optical character recognition model to obtain the intermediate recognition result. The intermediate recognition result may be displayed after being obtained. Then, the character recognition may be performed on a current intermediate spliced image through the lightweight optical character recognition model at set intervals; or the character recognition may be performed on a new intermediate spliced image obtained by image addition through the lightweight optical character recognition model every time one or more frames of images are added to the intermediate spliced image to obtain and display the intermediate recognition result, and in this case, the real-time performance of the intermediate recognition result can be effectively ensured. The lightweight OCR model can be obtained by cutting the generate OCR model (for example, by reducing the number of model nodes). compared to the generate OCR model, the lightweight OCR model has fewer model parameters and a smaller model size.

According to some embodiments of the present disclosure, a set interval may be set manually or by the image recognition apparatus, or may be set based on a using habit of a user, for example, may be 30 milliseconds, 40 milliseconds, 50 milliseconds, or the like, which is not specifically limited in the specification.

According to some embodiments of the present disclosure, the preset quantity of frames may be determined as follows. A large amount of using data of the use of the image recognition apparatus by the user is captured, an average quantity of frames in which the user uses the image recognition apparatus to acquire a whole character is determined based on the using data, and then the preset quantity of frames is determined based on the average quantity of frames. In this case, the preset quantity of frames is usually equal to the average quantity of frames, or may be greater than or less than the average quantity of frames. In addition, the preset quantity of frames may be set manually or by the image recognition apparatus. The set length is usually a length of a whole character, and the set length may also be set manually or by the image recognition apparatus, which is not specifically limited in the specification.

According to some embodiments of the present disclosure, in a case that the quantity of frames of the intermediate spliced image is detected not less than the preset quantity of frames, the intermediate spliced image is put in the lightweight optical character recognition (OCR) model to perform the character recognition to obtain the intermediate recognition result. The preset quantity of frames is usually the average quantity of frames of a whole character, and the quantity of frames of the intermediate spliced image is not less than the preset quantity of frames, thereby ensuring a high probability that the intermediate recognition result includes a whole character. In addition, the lightweight OCR model in use has an effect of small calculation amount and high calculation efficiency, so as to effectively improve the real-time performance of the recognized intermediate recognition result. In this way, in the process in which the user uses the image recognition apparatus to capture the image, the intermediate recognition result can be displayed in real time through the lightweight OCR model, thereby improving user experience.

According to some embodiments of the present disclosure, in order to ensure real-time display of the intermediate recognition result, it is ensured that the lightweight OCR model uses a single-core processor in the image recognition apparatus. The single-core processor may be exclusively occupied by the lightweight OCR model for use, that is, the single-core processor is only for use by the lightweight OCR model and not occupied by another program, so that the lightweight OCR model can keep operating, and calculation is performed when the intermediate spliced image enters the lightweight OCR model, thereby ensuring the real-time performance of a calculated intermediate recognition result.

In addition, step S104 is performed in a case of detecting a state change of the image recognition apparatus changes.

According to some embodiments of the present disclosure, there may be a case that when it is detected a pose change of the image recognition apparatus relative to a target object, it may be determined that the state of the image recognition apparatus changes. Specifically, when it is detected that the pose of the image recognition apparatus relative to the target object is adjusted from a contact state to a non-contact state, it is determined that the state of the image recognition apparatus changes; or, when it is detected that a state of an image acquisition device of the image recognition apparatus is adjusted from a state of turn-on to a state of turn-off, it is determined that the state of the image recognition apparatus changes; or, when it is detected that the pose of the image recognition apparatus relative to the target object is adjusted from a contact state to a non-contact state and a duration of the image recognition apparatus in the non-contact state is greater than a preset duration, it is determined that the state of the image recognition apparatus changes. In this case, it can be determined that the accuracy of user operation of the image recognition apparatus is higher, and a probability of mistaken recognition is reduced, thereby improving the user experience.

According to some embodiments of the present disclosure, in a case that it is detected that the state of the image recognition apparatus changes, the image set including all the images in the image splicing module is obtained, and then the character recognition is performed on the image set using the general OCR model to obtain the final recognition result. The final recognition result may be displayed after being obtained. In this case, compared with the lightweight OCR model, the general OCR model has a larger model size and higher recognition accuracy.

Using the dictionary pen A as an example, in the process of capturing the image of the target text in real time through the dictionary pen A, the image captured in real time is stored in the image splicing module frame by frame by the first thread. If at a certain moment, in the process of storing the captured real-time image by the first thread, the real-time splicing is performed on the stored real-time image by the second thread, it is detected whether a quantity of frames of a real-time intermediate spliced image is not less than the preset quantity of frames. if the quantity of frames of the intermediate spliced image is not less than the preset quantity of frames, the intermediate spliced image with the quantity of frames not less than the preset quantity of frames is put in the lightweight OCR model, and calculation is performed through a first single-core CPU exclusively occupied by the lightweight OCR model to obtain an intermediate splicing result. If the intermediate splicing result is " 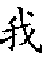 ", " 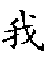 " is displayed; subsequently, a new intermediate spliced image is input in the lightweight OCR model to perform the character recognition at intervals of 40 milliseconds, intermediate recognition results are respectively " 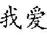 ", " 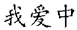 ", and " 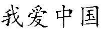 ", and the recognized intermediate recognition results are displayed.

In addition, a pose detection is performed on the dictionary pen A. If it is detected, through the pose detection, that a pose of the dictionary pen A relative to the target text changes from the contact state to the non-contact state and a duration is greater than 20 milliseconds, it is determined that a state of the dictionary pen A changes, and then the image set including all the images in the image splicing module is obtained. Then, the character recognition is performed on the image set using the general OCR model to obtain the final recognition result, and the displayed final recognition result is " 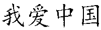 ".

In this way, in the process of storing the captured real-time image by the first thread, the real-time splicing is performed on the stored real-time image by the second thread. In this way, by using a concurrent manner, the loss rate of the captured image can be effectively reduced, and definition of the spliced image can be effectively ensured in a case that the loss rate of the image is reduced, thereby ensuring the accuracy of the recognized final recognition result. Splicing delay can also be effectively reduced in the concurrent manner. In addition, due to the use of the lightweight OCR model for performing the character recognition on the intermediate spliced image, a processor load of the image recognition apparatus can be reduced, and recognition real-time performance of the character recognition performed on the intermediate spliced image can be improved, In a case that the recognition real-time performance is improved, a response time of a first character displayed on a screen can be shortened, thereby improving user experience.

### Apparatus Embodiment

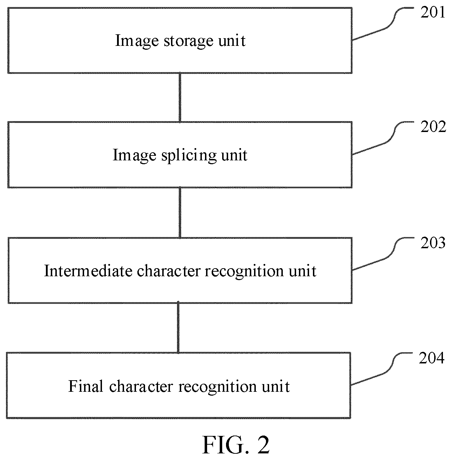

FIG. 2 is a structural block diagram of an embodiment of an image recognition apparatus of the present disclosure, specifically including:
an image storage unit 201, configured to store in a process of capturing an image in real-time through an image recognition apparatus, the captured real-time image in an image splicing module by a first thread;
an image splicing unit 202, configured to perform, in the process of storing the captured real-time image by the first thread, real-time splicing on more than one image stored in the image splicing module by a second thread to obtain an intermediate spliced image;
an intermediate character recognition unit 203, configured to perform character recognition on the intermediate spliced image through a lightweight optical character recognition model to obtain an intermediate recognition result, and display the intermediate recognition result, the lightweight optical character recognition model exclusively occupying a single-core processor in the image recognition apparatus for use; and
a final character recognition unit 204, configured to obtain, in a case that it is detected that a state of the image recognition apparatus changes, an image set including all images in the image splicing module, the all images comprising real-time images captured by the first thread, and perform the character recognition on the image set through the general optical character recognition model to obtain a final recognition result, and display the final recognition result; wherein it is determined that the state of the image recognition apparatus changes when it is detected that a pose of the image recognition apparatus relative to a target object changes.

In some embodiments, the image splicing unit 202 is configured to start the second thread through the image splicing module, and perform the real-time splicing on the more than one image stored in the image splicing module by the second thread to obtain the intermediate spliced image.

In some embodiments, the intermediate character recognition unit 203 is configured to perform , in a case that a quantity of frames of the intermediate spliced image is not less than a preset quantity of frames, the character recognition on the intermediate spliced image through the lightweight optical character recognition model to obtain the intermediate recognition result, and display the intermediate recognition result.

In some embodiments, the intermediate character recognition unit 203 is configured to perform the character recognition on the intermediate spliced image through the lightweight optical character recognition model.

In some embodiments, the image recognition apparatus includes a dictionary pen and a talking pen.

As for the apparatus embodiment, since it is basically similar to the method embodiment, the description is relatively simple. For the related parts, reference is made to the description of the method embodiment.

The embodiments in the present disclosure are all described in a progressive manner. Descriptions of each embodiment focus on differences from other embodiments, and same or similar parts among respective embodiments may be mutually referenced.

Specific operation execution manners of the modules in the apparatus in the foregoing embodiment have been described in detail in the embodiment about the method, and details will not be described herein again.

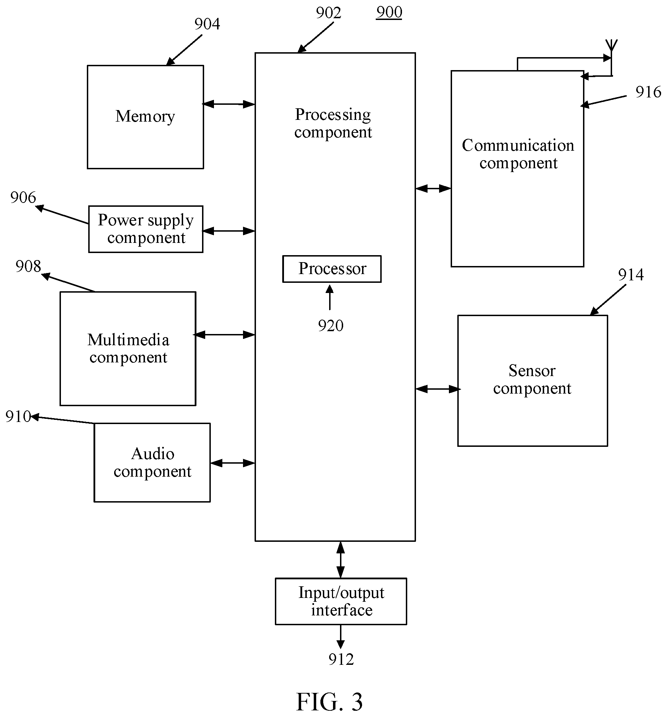

FIG. 3 is a structural block diagram of an image recognition apparatus used as a device according to an embodiment of the present disclosure. For example, an apparatus 900 may be a mobile phone, a computer, a digital broadcasting terminal, a messaging device, a game console, a tablet device, a medical device, a fitness facility, a personal digital assistant, or the like.

Referring to FIG. 3, the apparatus 900 may include one or more of the following components: a processing component 902, a memory 904, a power supply component 906, a multimedia component 908, an audio component 910, an input/output (I/O) interface 912, a sensor component 914, and a communication component 916.

The processing component 902 usually controls the whole operation of the apparatus 900, such as operations associated with displaying, a phone call, data communication, a camera operation, and a recording operation. The processing component 902 may include one or more processors 920 to execute instructions, to complete all or some steps of the foregoing method. In addition, the processing component 902 may include one or more modules, to facilitate interaction between the processing component 902 and other components. For example, the processing component 902 may include a multimedia module, to facilitate interaction between the multimedia component 908 and the processing component 902.

The memory 904 is configured to store data of various types to support operations on the device 900. Examples of the data include instructions of any application program or method that are used for operations on the apparatus 900, contact data, address book data, a message, a picture, a video, and the like. The memory 904 can be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disc, or an optical disc.

The power supply component 906 provides power to various components of the apparatus 900. The power supply component 906 may include a power supply management system, one or more power supplies, and other components associated with generating, managing, and allocating power for the apparatus 900.

The multimedia component 908 includes a screen providing an output interface between the apparatus 900 and a user. In some embodiments, the screen may include a liquid crystal display (LCD) and a touch panel (TP). If the screen includes a TP, the screen may be implemented as a touchscreen, to receive an input signal from the user. The TP includes one or more touch sensors to sense touching, sliding, and gestures on the TP. The touch sensor may not only sense a boundary of touching or sliding operations, but also detect duration and pressure related to the touching or sliding operations. In some embodiments, the multimedia component 908 includes a front camera and/or a rear camera. When the apparatus 900 is in an operating mode, such as a shooting mode or a video mode, the front camera and/or the rear camera may receive external multimedia data. Each front camera and rear camera may be a fixed optical lens system or have a focal length and an optical zooming capability.

The audio component 910 is configured to output and/or input an audio signal. For example, the audio component 910 includes a microphone (MIC), and when the apparatus 900 is in an operating mode, such as a call mode, a recording mode, and a voice identification mode, the MIC is configured to receive an external audio signal. The received audio signal may be further stored in the memory 904 or transmitted through the communication component 916. In some embodiments, the audio component 910 further includes a speaker, configured to output an audio signal.

The I/O interface 912 provides an interface between the processing component 902 and an external interface module. The external interface module may be a keyboard, a click wheel, buttons, or the like. The buttons may include, but is not limited to: a homepage button, a volume button, a start-up button, and a locking button.

The sensor component 914 includes one or more sensors, configured to provide status evaluation in each aspect to the apparatus 900. For example, the sensor component 914 may detect a turning on/off status of the apparatus 900, and relative positioning of the component. For example, the component is a display and a small keyboard of the apparatus 900. The sensor component 914 may further detect a position change of the apparatus 900 or a component of the apparatus 900, existence or nonexistence of contact between the user and the apparatus 900, an orientation or acceleration/deceleration of the apparatus 900, and the temperature change of the apparatus 900. The sensor component 914 may include a proximity sensor, configured to detect existence of nearby objects without any physical contact. The sensor component 914 may further include an optical sensor, such as a CMOS or CCD image sensor, that is used in an imaging application. In some embodiments, the sensor component 914 may further include an acceleration sensor, a gyroscope sensor, a magnetic sensor, a pressure sensor, or a temperature sensor.

The communication component 916 is configured to facilitate communication in a wired or wireless manner between the apparatus 900 and other devices. The apparatus 900 may access a wireless network based on communication standards, such as Wi-Fi, 2G, or 3G, or a combination thereof. In an exemplary embodiment, the communication component 916 receives a broadcast signal or broadcast related information from an external broadcast management system through a broadcast channel. In an exemplary embodiment, the communication component 916 further includes a near field communication (NFC) module, to promote short range communication. For example, the NFC module may be implemented based on a radio frequency identification (RFID) technology, an infra-red data association (IrDA) technology, an ultra-wideband (UWB) technology, a Bluetooth (BT) technology, and other technologies.

In some embodiments, the apparatus 900 can be implemented as one or more application specific integrated circuits (ASIC), digital signal processors (DSP), digital signal processing devices (DSPD), programmable logic devices (PLD), field programmable gate arrays (FPGA), controllers, micro-controllers, microprocessors, or other electronic elements, so as to perform the foregoing method.

In some embodiments, a non-transitory computer-readable storage medium including instructions is further provided, for example, a memory 904 including instructions. The foregoing instructions may be executed by a processor 920 of the apparatus 900 to complete the foregoing method. For example, the non-transitory computer readable storage medium may be a ROM, a random access memory (RAM), a CD-ROM, a magnetic tape, a floppy disk, an optical data storage device, or the like.

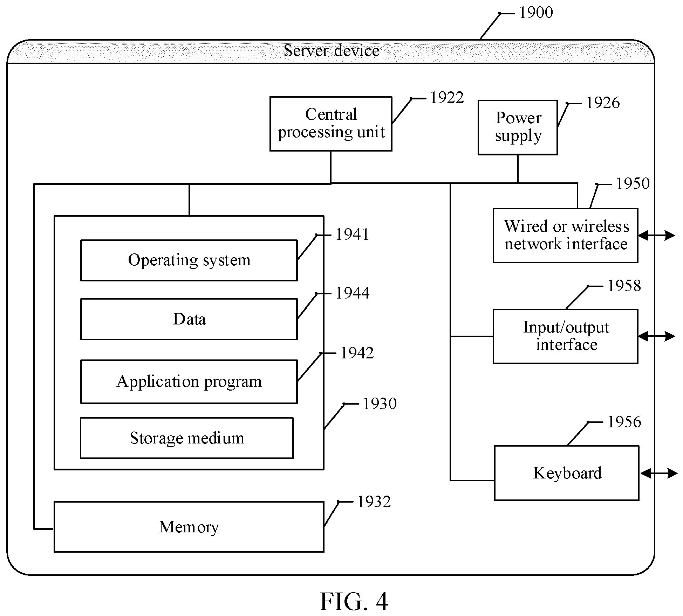

FIG. 4 is a structural block diagram of a server according to some embodiments of the present disclosure. A server 1900 may vary greatly due to different configurations or performance, and may include one or more central processing units (CPU) 1922 (for example, one or more processors) and memories 1932, and one or more storage media 1930 (for example, one or more mass storage devices) storing an application program 1942 or data 1944. The memory 1932 and the storage medium 1930 may be a transient memory or a persistent memory. A program stored in the storage medium 1930 may include one or more modules (not shown), and each module may include a series of instruction operations for the server. Further, the CPU 1922 may be configured to communicate with the storage medium 1930 to execute a series of instruction operations in the storage medium 1930 on the server 1900.

The server 1900 may further include one or more power supplies 1926, one or more wired or wireless network interfaces 1950, one or more input/output interfaces 1958, one or more keyboards 1956, and/or, one or more operating systems 1941, for example, Windows ServerTM, Mac OS XTM, UnixTM, LinuxTM, and FreeBSDTM.

A non-transitory computer-readable storage medium, when the instructions in the storage medium are executed by a processor of the apparatus (a device or a server), enables the apparatus to perform an image processing method, the method including: storing the captured real-time image in an image splicing module by a first thread in a process of capturing an image in real time through an image recognition apparatus; performing real-time splicing on the stored real-time image by a second thread to obtain an intermediate spliced image in a process of storing the captured real-time image by the first thread; performing character recognition on the intermediate spliced image through a lightweight optical character recognition model to obtain and display an intermediate recognition result; and obtaining, in a case of detecting a state change of the image recognition apparatus, an image set including all images in the image splicing module, and performing the character recognition on the image set through a general optical character recognition model to obtain a final recognition result.

The present disclosure is described with reference to flowcharts and/or block diagrams of the method, the device (system), and the computer program product according to the present disclosure. It may be understood that, computer program instructions can implement each procedure and/or block in the flowcharts and/or block diagrams, and a combination of procedures and/or blocks in the flowcharts and/or block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate a device for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction device. The instruction device implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although exemplary embodiments of the present disclosure have been described, once a person skilled in the art learns of the basic creative concept, additional changes and modifications may be made to the embodiments. Therefore, the attached claims are intended to be construed as to cover the exemplary embodiments and all changes and modifications falling within the scope of the present disclosure.

Apparently, a person skilled in the art may make various modifications and variations to the present disclosure without departing from the scope of the present disclosure. In this way, if the modifications and variations of the present disclosure fall within the scope of the claims of the present disclosure and equivalent technologies thereof, the present disclosure also intends to include the changes and variations.

## Claims

1. A computer-implemented image processing method, comprising:
storing (101), in a process of capturing an image in real-time through an image recognition apparatus, the captured real-time image frame by frame in an image splicing module by a first thread;
performing (102), in the process of storing the captured real-time image by the first thread, real-time splicing on the frames stored in the image splicing module by a second thread to obtain an intermediate spliced image;
performing character recognition on the intermediate spliced image through a lightweight optical character recognition model to obtain an intermediate recognition result and displaying the intermediate recognition result (103), the lightweight optical character recognition model exclusively occupying a single-core processor in the image recognition apparatus for use;
wherein the method is **characterized by**:
obtaining (104), in a case that it is detected that a state of the image recognition apparatus changes, an image set comprising all images in the image splicing module, the all images comprising real-time images captured by the first thread; and
performing the character recognition on the image set through a general optical character recognition model to obtain a final recognition result and displaying the final recognition result (104);
wherein it is determined that the state of the image recognition apparatus changes when it is detected that a pose of the image recognition apparatus relative to a target object changes.

2. The method according to claim 1, wherein the performing (102) real-time splicing on more than one image stored in the image splicing module by a second thread to obtain an intermediate spliced image comprises:
starting the second thread through the image splicing module, and performing the real-time splicing on the more than one image stored in the image splicing module by the second thread to obtain the intermediate spliced image.

3. The method according to claim 2, wherein the performing character recognition on the intermediate spliced image through a lightweight optical character recognition model to obtain an intermediate recognition result and displaying the intermediate recognition result (103) comprises:
performing, in a case that a quantity of frames of the intermediate spliced image is not less than a preset quantity of frames, the character recognition on the intermediate spliced image through the lightweight optical character recognition model to obtain the intermediate recognition result and displaying the intermediate recognition result.

4. The method according to claim 3, wherein the performing the character recognition on the intermediate spliced image through the lightweight optical character recognition model comprises:
performing the character recognition on the intermediate spliced image through the lightweight optical character recognition model.

5. An apparatus for data processing, comprising a memory and one or more programs, the one or more programs being stored in the memory and configured to be executed by one or more processors, and the one or more programs comprising operations of the method according to any one of claims 1 to 4.

6. A machine-readable medium, storing instructions, the instructions, when executed by one or more processors, causing the apparatus to perform the method according to one or more of claims 1 to 4.

## Patentansprüche

1. Ein computerimplementiertes Bildverarbeitungsverfahren, umfassend:
Speichern (101), in einem Prozess des Erfassens eines Bilds in Echtzeit durch eine Bilderkennungsvorrichtung, des erfassten Echtzeitbilds Bild für Bild in einem Bildzusammenfügungsmodul durch einen ersten Thread;
Durchführen (102), in dem Prozess des Speicherns des erfassten Echtzeitbilds durch den ersten Thread, eines Echtzeit-Zusammenfügens an den in dem Bildzusammenfügungsmodul gespeicherten Einzelbildern durch einen zweiten Thread, um ein vorläufig zusammengefügtes Bild zu erhalten;
Durchführen einer Zeichenerkennung an dem vorläufig zusammengefügten Bild durch ein leichtgewichtiges optisches Zeichenerkennungsmodell, um ein vorläufiges Erkennungsergebnis zu erhalten, und Anzeigen des vorläufigen Erkennungsergebnisses (103), wobei das leichtgewichtige optische Zeichenerkennungsmodell ausschließlich einen Einkernprozessor in der Bilderkennungsvorrichtung zur Verwendung belegt;
wobei das Verfahren **gekennzeichnet ist durch**:
Erhalten (104), in einem Fall, dass erfasst wird, dass sich ein Zustand der Bilderkennungsvorrichtung ändert, eines Bildsatzes, der alle Bilder in dem Bildzusammenfügungsmodul umfasst, wobei die allen Bilder Echtzeitbilder umfassen, die **durch** den ersten Thread erfasst werden; und
Durchführen der Zeichenerkennung an dem Bildsatz **durch** ein allgemeines optisches Zeichenerkennungsmodell, um ein endgültiges Erkennungsergebnis zu erhalten, und Anzeigen des endgültigen Erkennungsergebnisses (104);
wobei bestimmt wird, dass sich der Zustand der Bilderkennungsvorrichtung ändert, wenn erfasst wird, dass sich eine Pose der Bilderkennungsvorrichtung relativ zu einem Zielobjekt ändert.

2. Verfahren nach Anspruch 1, wobei das Durchführen (102) eines Echtzeit-Zusammenfügens an mehr als einem in dem Bildzusammenfügungsmodul gespeicherten Bild durch einen zweiten Thread, um ein vorläufig zusammengefügtes Bild zu erhalten, umfasst:
Starten des zweiten Threads durch das Bildzusammenfügungsmodul und Durchführen des Echtzeit-Zusammenfügens an dem mehr als einen in dem Bildzusammenfügungsmodul gespeicherten Bild durch den zweiten Thread, um das vorläufig zusammengefügte Bild zu erhalten.

3. Verfahren nach Anspruch 2, wobei das Durchführen einer Zeichenerkennung an dem vorläufig zusammengefügten Bild durch ein leichtgewichtiges optisches Zeichenerkennungsmodell, um ein vorläufiges Erkennungsergebnis zu erhalten, und Anzeigen des vorläufigen Erkennungsergebnisses (103) umfasst:
Durchführen, in einem Fall, dass eine Anzahl von Einzelbildern des vorläufig zusammengefügten Bilds nicht kleiner als eine voreingestellte Anzahl von Einzelbildern ist, der Zeichenerkennung an dem vorläufig zusammengefügten Bild durch das leichtgewichtige optische Zeichenerkennungsmodell, um das vorläufige Erkennungsergebnis zu erhalten, und Anzeigen des vorläufigen Erkennungsergebnisses.

4. Verfahren nach Anspruch 3, wobei das Durchführen der Zeichenerkennung an dem vorläufig zusammengefügten Bild durch das leichtgewichtige optische Zeichenerkennungsmodell umfasst:
Durchführen der Zeichenerkennung an dem vorläufig zusammengefügten Bild durch das leichtgewichtige optische Zeichenerkennungsmodell.

5. Vorrichtung zur Datenverarbeitung, umfassend einen Speicher und ein oder mehrere Programme, wobei das eine oder die mehreren Programme in dem Speicher gespeichert und dazu konfiguriert sind, durch einen oder mehrere Prozessoren ausgeführt zu werden, und wobei das eine oder die mehreren Programme Operationen des Verfahrens nach einem der Ansprüche 1 bis 4 umfassen.

6. Maschinenlesbares Medium, das Anweisungen speichert, wobei die Anweisungen, wenn sie durch einen oder mehrere Prozessoren ausgeführt werden, die Vorrichtung veranlassen, das Verfahren nach einem oder mehreren der Ansprüche 1 bis 4 durchzuführen.

## Revendications

1. Procédé de traitement d'image mis en œuvre par ordinateur, comprenant :
stocker (101), dans un processus de capture d'une image en temps réel par un appareil de reconnaissance d'image, l'image en temps réel capturée trame par trame dans un module d'assemblage d'images par un premier fil d'exécution ;
réaliser (102), dans le processus de stockage de l'image en temps réel capturée par le premier fil d'exécution, un assemblage en temps réel sur les trames stockées dans le module d'assemblage d'images par un second fil d'exécution afin d'obtenir une image assemblée intermédiaire ;
réaliser une reconnaissance de caractères sur l'image assemblée intermédiaire par l'intermédiaire d'un modèle léger de reconnaissance optique de caractères afin d'obtenir un résultat de reconnaissance intermédiaire et afficher le résultat de reconnaissance intermédiaire (103), le modèle léger de reconnaissance optique de caractères occupant exclusivement un processeur monocœur dans l'appareil de reconnaissance d'image pour utilisation ;
dans lequel le procédé est **caractérisé par** :
obtenir (104), dans un cas où il est détecté qu'un état de l'appareil de reconnaissance d'image change, un ensemble d'images comprenant toutes les images dans le module d'assemblage d'images, les toutes images comprenant des images en temps réel capturées par le premier fil d'exécution ; et
réaliser la reconnaissance de caractères sur l'ensemble d'images par l'intermédiaire d'un modèle général de reconnaissance optique de caractères afin d'obtenir un résultat de reconnaissance final et afficher le résultat de reconnaissance final (104) ;
dans lequel il est déterminé que l'état de l'appareil de reconnaissance d'image change lorsqu'il est détecté qu'une pose de l'appareil de reconnaissance d'image par rapport à un objet cible change.

2. Procédé selon la revendication 1, dans lequel le fait de réaliser (102) un assemblage en temps réel sur plus d'une image stockée dans le module d'assemblage d'images par un second fil d'exécution afin d'obtenir une image assemblée intermédiaire comprend :
démarrer le second fil d'exécution par l'intermédiaire du module d'assemblage d'images, et réaliser l'assemblage en temps réel sur ladite plus d'une image stockée dans le module d'assemblage d'images par le second fil d'exécution afin d'obtenir l'image assemblée intermédiaire.

3. Procédé selon la revendication 2, dans lequel le fait de réaliser une reconnaissance de caractères sur l'image assemblée intermédiaire par l'intermédiaire d'un modèle léger de reconnaissance optique de caractères afin d'obtenir un résultat de reconnaissance intermédiaire et afficher le résultat de reconnaissance intermédiaire (103) comprend :
réaliser, dans un cas où une quantité de trames de l'image assemblée intermédiaire n'est pas inférieure à une quantité prédéfinie de trames, la reconnaissance de caractères sur l'image assemblée intermédiaire par l'intermédiaire du modèle léger de reconnaissance optique de caractères afin d'obtenir le résultat de reconnaissance intermédiaire et afficher le résultat de reconnaissance intermédiaire.

4. Procédé selon la revendication 3, dans lequel le fait de réaliser la reconnaissance de caractères sur l'image assemblée intermédiaire par l'intermédiaire du modèle léger de reconnaissance optique de caractères comprend :
réaliser la reconnaissance de caractères sur l'image assemblée intermédiaire par l'intermédiaire du modèle léger de reconnaissance optique de caractères.

5. Appareil de traitement de données, comprenant une mémoire et un ou plusieurs programmes, les un ou plusieurs programmes étant stockés dans la mémoire et configurés pour être exécutés par un ou plusieurs processeurs, et les un ou plusieurs programmes comprenant des opérations du procédé selon l'une quelconque des revendications 1 à 4.

6. Support lisible par machine, stockant des instructions, les instructions, lorsqu'elles sont exécutées par un ou plusieurs processeurs, amenant l'appareil à réaliser le procédé selon une ou plusieurs des revendications 1 à 4.
